# EUROPEAN PATENT APPLICATION

(11) **EP 3 159 493 A1**
(43) Date of publication of application: **26.04.2017**
(21) Application number: 16194079.6
(22) Date of filing: 17.10.2016
(51) Int. Cl.: F01D 11/24

(54) **ACTIVE CLEARANCE CONTROL WITH INTEGRAL DOUBLE WALL HEAT SHIELDING**

(30) Priority: 23.10.2015 US 201514920953
(71) Applicant: General Electric Company, Schenectady, NY 12345 (US)
(72) Inventor: SABO, Nicolas, Kristopher, Cincinnati, OH 45215 (US); SCHIMMELS, Scott, Alan, Cincinnati, OH 45215 (US); SHIVANATHAN, Sivaruban, Cincinnati, OH 45215 (US); PENDURTI, Srinivas, Cincinnati, OH 45215 (US)
(74) Representative: Williams, Andrew Richard

(57) **Abstract**

A gas turbine engine thermal control double-wall apparatus 312 for active clearance control and a method of using the apparatus are provided herein. The apparatus 312 has a thermal air distribution manifold 350 encircling an axially extending portion of an engine outer casing 466. The manifold 350 has a plurality of header assemblies 357 with an annular supply tube 354 and a plurality of annular spray rails 460 in fluid supply communication with at least one of the plurality of supply plenums 356. The annular spray rails 460 define spray holes 462 that are oriented to impinge thermal control air 336 onto the outer casing 466 having at least one thermal control ring 484 attached thereto before being exhausted from circumferentially extending exhaust passages 526. All of the thermal control apparatus 312 surfaces in direct contact with the thermal control air 336 are constructed of an integrated double wall heat shield 610 defining a hermetically sealed cavity 612 between the walls therein.

## Description

The present subject matter relates generally to active clearance control in gas turbine engines, and more particularly to applying thermal shielding to ducts and manifolds that supply cooling air, or thermal control air, to impinge various engine structures experiencing thermal growth.

The control of the radial clearance between the tips of rotating blades and the surrounding annular shroud in axial flow gas turbine engines is one known technique for improving engine efficiency. By reducing the blade tip to shroud clearance, designers can reduce the quantity of turbine working fluid that bypasses the blades, thereby increasing engine power output for a given fuel or other engine input.

Active clearance control (ACC) refers to those clearance control arrangements where a quantity of working fluid is employed by the clearance control system to regulate the temperature of certain engine structures and thereby control the blade tip to shroud clearance (CL) as a result of the thermal expansion or contraction of the cooled structure. Engine performance parameters such as thrust, specific fuel consumption (SFC), muscle, and exhaust gas temperature (EGT) margin are strongly dependent upon clearances between turbine blade tips and static seals or shrouds surrounding the blade tips. Thus, active clearance control modulates a flow of cool or relatively hot air, generally referred to as thermal control air, from the engine fan and/or compressor to spray it on high and low pressure turbine casings to shrink the casings relative to the high and low pressure turbine blade tips under required operating conditions - ground as well as altitude, both steady state and transient. The air may be flowed to or sprayed or impinged on other static structures used to support the shrouds or seals around the blade tips such as flanges or pseudo-flanges which function as thermal control rings.

It is a feature of such ACC systems that the cooling airflow may be switched or modulated responsive to various engine, aircraft, or environmental parameters for causing a reduction in blade tip to shroud clearance during those portions of the engine operating power range wherein such clearance control is most advantageous. Such active clearance control systems typically route cooling air through un-insulated ducting and manifolds that detrimentally heat the cooling air via heat transfer from the duct and manifold walls prior to impingement.

It is highly desirable to decrease heat transfer between the ACC thermal control air and surrounding structures or fluids to make more efficient use of the thermal control air. Thus, it is desirable to provide a controlled flow of lower temperature thermal control air to impinge thermal control rings and wash radially along the entirety of the thermal control rings and other engine structures experiencing thermal growth. Consequently, there exists a need for an active clearance control system for gas turbine engines that reduces heat transfer to the thermal control air through manifold walls thereby lowering the impingement air temperature on engine structures.

Various aspects and advantages of the invention will be set forth in part in the following description, or may be clear from the description, or may be learned through practice of the invention.

One embodiment of the invention is a gas turbine engine thermal control apparatus having a thermal air distribution manifold encircling an axially extending portion of an outer casing. The thermal air distribution manifold has a plurality of header assemblies with an annular supply tube disposed in fluid supply communication with a plurality of supply plenums. A plurality of annular spray rails are in fluid supply communication with at least one of the plurality of supply plenums, the annular spray rails defining spray holes oriented to impinge thermal control air onto the outer casing having at least one thermal control ring attached to the outer casing. There are circumferentially extending exhaust passages operable to exhaust the thermal control air from an annular region between the outer casing and the manifold after the thermal control air has been sprayed on at least one thermal control ring attached to the outer casing and onto the outer casing by the annular spray rails. All of the thermal control apparatus surfaces in direct contact with the thermal control air are constructed of an integrated double wall heat shield defining a hermetically sealed cavity between the walls therein.

Another embodiment of the invention is a method for supplying and exhausting thermal control air in a gas turbine engine thermal control apparatus, including the steps of; manufacturing the thermal control apparatus surfaces, having direct contact with the thermal control air, with an integrated double wall heat shield defining a hermetically sealed cavity between the walls of the double wall heat shield, spraying thermal control air on at least one thermal control ring attached to an outer casing and/or onto the outer casing with spray rails having spray holes in an annular region between the outer casing and a thermal air distribution manifold, encircling the thermal control air in an axially extending portion of the casing, and exhausting the thermal control air through circumferentially extending exhaust passages.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 is a schematic cross-sectional view of a gas turbine engine in accordance with one embodiment of the present disclosure;
FIG. 2 is an enlarged circumferential cross sectional side view of a high pressure turbine portion of a gas turbine engine in accordance with one embodiment of the present disclosure;
FIG. 3 is a perspective view illustration of a thermal air distribution intake, ducting, annular supply tube, and manifolds of an active clearance control system;
FIG. 4 is a side view section of a header assembly installed on a high pressure turbine portion, cut through the supply header;
FIG. 5 is a perspective view of a header assembly segment of the thermal air distribution manifold and header assembly illustrated in FIG. 4;
FIG. 6 is a side view section showing an example double wall surface in a rounded corner of the ACC system;
FIG. 7 is a side view section showing an example double wall surface in a square corner of the ACC system;
FIG. 8 is a radially inwardly looking perspective view of a header assembly segment showing the duct entry opening in the annular supply tube;
FIG. 9 is a perspective view of the annular supply tube t-fitting, at the supply duct entry point, showing the double wall construction;
FIG. 10 is a section cut through 4 spray rails and with the spray holes positioned at thickened corners of the double wall;
FIG. 11A is an example of lattice structure support members between the heat shield walls;
FIG. 11B is an example of individual stud structural support members between the heat shield walls; and
FIG. 11C is an example of offset slotted stud web structural support between the heat shield walls;
FIG. 12 is a section cut of the double-wall construction between impingement features with no material junction at the bottom of the rail to better insulate the thermal control air exits;
FIG. 13 is a section cut of the double-wall construction with no thermal control air exits.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms 'cooling air' and 'thermal control air' are interchangeable.

Thermal shielding of an active clearance control (ACC) system in gas turbine engines and other machinery is generally provided using 3D additive manufacturing. An ACC system can be built in discrete, monolithic parts with double wall, or sandwich wall, construction and manufactured with multiple (e.g. 3-sided or 4-sided) supply rails that supply impingement air to engine structures that experience thermal growth. The double wall cavity is hermetically sealed and acts as a retention barrier and closed chamber for trapped gas or air that provides insulation in the form of still air.

Insulating contact surfaces of the moving thermal control air, using still air inside a hermetically sealed double wall cavity of ducting, manifold assembly and rails, decreases the overall heat transfer coefficient at the contact surfaces inside the ACC manifold as compared to current single wall un-insulated construction. As such, the supply temperature of the impingement air is decreased to allow the lower temperature thermal control air to more effectively remove heat (cooling load) at the impingment points in the turbine casing using a larger temperature difference between the supply and exhaust air temperatures (ΔTₐᵢᵣ). The lower temperature impingement cooling air also lowers the average operating temperature of the turbine structures being cooled and provides more effective cooling at the impingement surfaces where it is most needed. Additionally, when insulating the thermal control air contact surfaces using a fixed thermal control airflow rate, both the thermal control air supply and exhaust temperatures can be decreased when removing a fixed amount of heat (cooling load) resulting in the same ΔTₐᵢᵣ. These improvements result in higher engine muscle capability and reduced case out-of-roundness.

ACC systems rely on cold-section air on a gas turbine, for example; booster, fan stream, or shop provided air. This cool air travels via ducting to manifolds around the turbine of the engine, and travels through the manifolds to impinge air on turbine features to provide control of the growth of the turbine casing versus the growth of the vane blades turning inside the case. As such, the blade tip clearances to the case are controlled which results in improved specific fuel consumption.

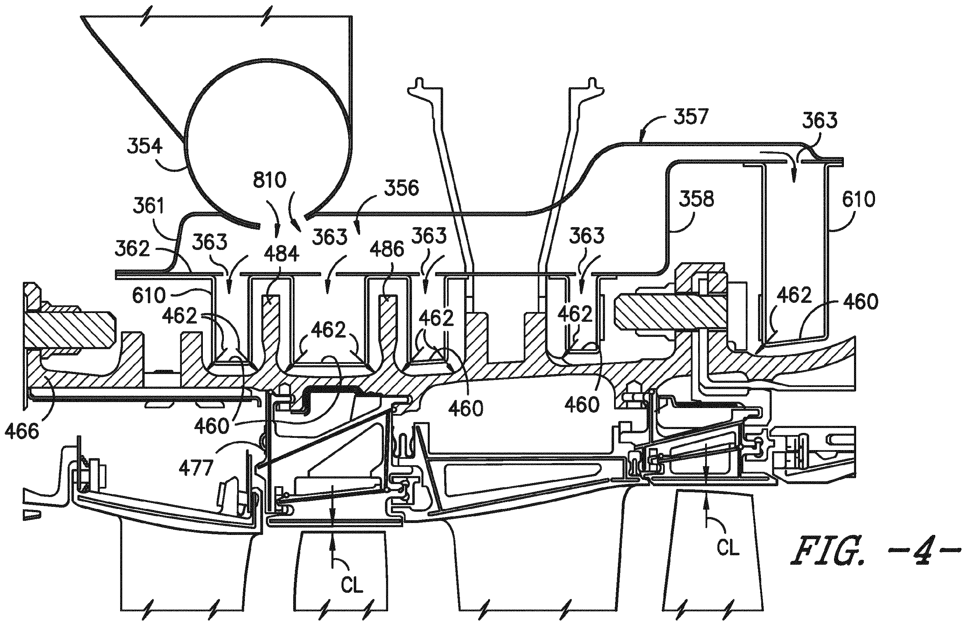

The challenge faced in industry and aviation is acquiring more efficiency of the turbine, or providing more work from the air used in the turbine. The cooling air picks up heat through the pipe and ducting, as well as significant heat pick-up in the impingement rails. This results in high thermal control air temperature (Tⱼₑₜ) at the supply holes (see 462, FIG. 4) impinging the casing structures. However, conventional insulation methods are not applicable to the impingement rails due to restricted space and packaging. Also, external insulation adds additional failure modes that risk proper operation of the ACC system.

Compared to traditional single wall sheet metal ACC construction, the devices and methods of this disclosure use additive technology to build double-walled manifolds which encase still air in a hermetically sealed cavity between the walls. The still air acts as insulation to lower the pre-impingement air temperature. The addition of the double-walled features in the ACC reduces heat pick-up of pre-impingement air, which helps to reduce the thermal control air temperature (Tⱼₑₜ) at the supply holes (see 462, FIG. 4) variation from entry to last manifold. This reduction of Tⱼₑₜ variation relieves case distortion and helps to control out-of-roundness. Ultimately, this effect results in lower tip clearances, more muscle capability, and better SFC. Muscle capability can be increased by 15-20%, case out-of-roundness can be improved by 15%, and specific fuel consumption can be reduced by reducing the temperature of impingement air as disclosed herein.

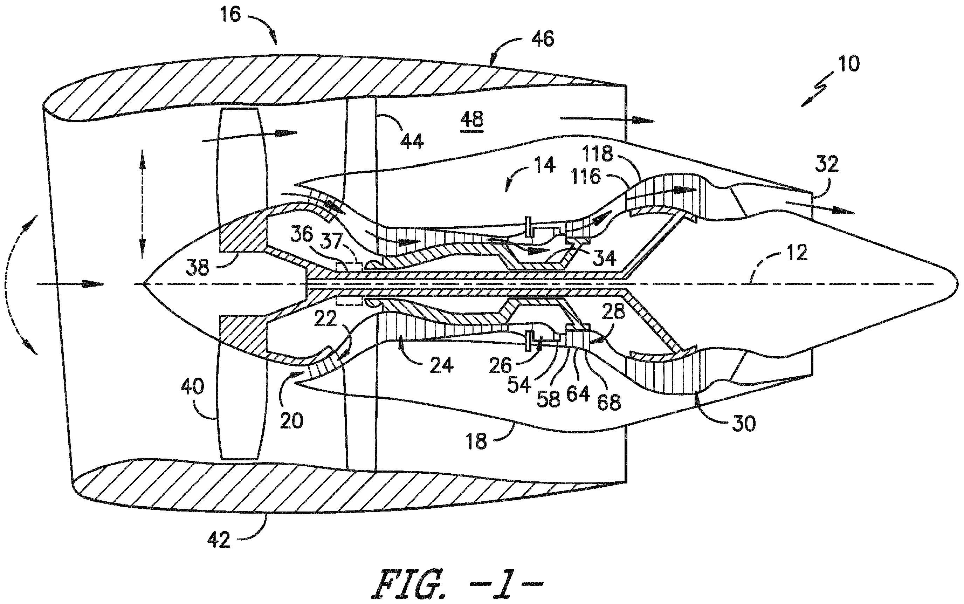

Referring now to the drawings, FIG. 1 is a schematic cross-sectional view of an exemplary high-bypass turbofan type engine 10 herein referred to as "turbofan 10" as may incorporate various embodiments of the present disclosure. As shown in FIG. 1, the turbofan 10 has a longitudinal or axial centerline axis 12 that extends therethrough for reference purposes. In general, the turbofan 10 may include a core turbine or gas turbine engine 14 disposed downstream from a fan section 16.

The gas turbine engine 14 may generally include a substantially tubular outer casing 18 that defines an annular inlet 20. The outer casing 18 may be formed from multiple casings. The outer casing 18 encases, in serial flow relationship, a compressor section having a booster or low pressure (LP) compressor 22, a high pressure (HP) compressor 24, a combustion section 26, a turbine section including a high pressure (HP) turbine 28, a low pressure (LP) turbine 30 (e.g., including vanes 116 and rotor blades 118), and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The (LP) spool 36 may also be connected to a fan spool or shaft 38 of the fan section 16. In particular embodiments, the (LP) spool 36 may be connected directly to the fan spool 38 such as in a direct-drive configuration. In alternative configurations, the (LP) spool 36 may be connected to the fan spool 38 via a speed reduction device 37 such as a reduction gear gearbox in an indirect-drive or geared-drive configuration. Such speed reduction devices may be included between any suitable shafts / spools within engine 10 as desired or required.

As shown in FIG. 1, the fan section 16 includes a plurality of fan blades 40 that are coupled to and that extend radially outwardly from the fan spool 38. An annular fan casing or nacelle 42 circumferentially surrounds the fan section 16 and/or at least a portion of the gas turbine engine 14. It should be appreciated by those of ordinary skill in the art that the nacelle 42 may be configured to be supported relative to the gas turbine engine 14 by a plurality of circumferentially-spaced outlet guide vanes 44. Moreover, a downstream section 46 of the nacelle 42 (downstream of the guide vanes 44) may extend over an outer portion of the gas turbine engine 14 so as to define a bypass airflow passage 48 therebetween.

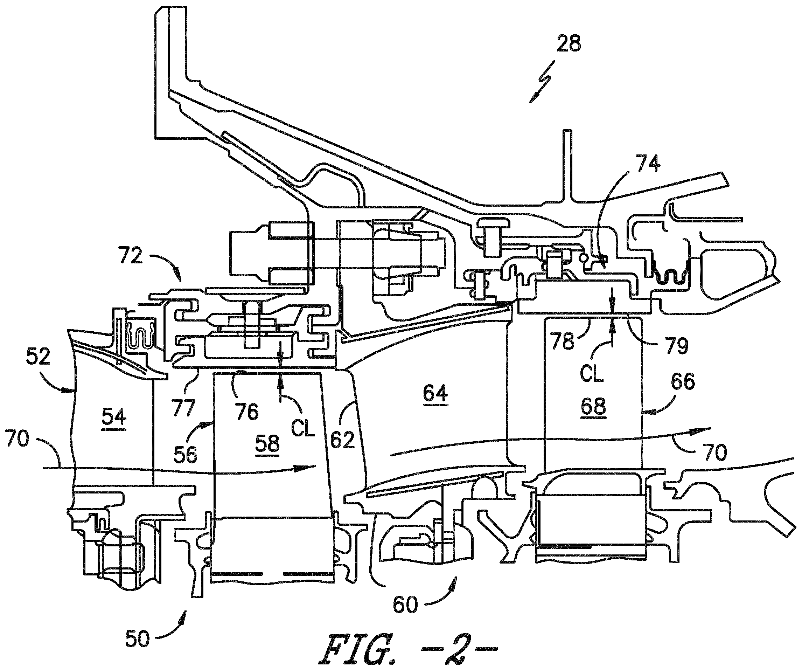

FIG. 2 provides an enlarged cross sectioned view of the HP turbine 28 portion of the gas turbine engine 14 as shown in FIG. 1, as may incorporate various embodiments of the present invention. As shown in FIG. 2, the HP turbine 28 includes, in serial flow relationship, a first stage 50 which includes an annular array 52 of stator vanes 54 (only one shown) axially spaced from an annular array 56 of turbine rotor blades 58 (only one shown). The HP turbine 28 further includes a second stage 60 which includes an annular array 62 of stator vanes 64 (only one shown) axially spaced from an annular array 66 of turbine rotor blades 68 (only one shown). The turbine rotor blades 58, 68 extend radially outwardly from and are coupled to the HP spool 34 (FIG. 1). The stator vanes 54, 64 and the turbine rotor blades 58, 68 at least partially define a hot gas path 70 for routing combustion gases from the combustion section 26 (FIG. 1) through the HP turbine 28.

As further shown in FIG. 2, the HP turbine may include one or more shroud assemblies, each of which forms an annular ring about an annular array of rotor blades. For example, a shroud assembly 72 may form an annular ring around the annular array 56 of rotor blades 58 of the first stage 50, and a shroud assembly 74 may form an annular ring around the annular array 66 of turbine rotor blades 68 of the second stage 60. In general, shrouds of the shroud assemblies 72, 74 are radially spaced from nozzle tips 76, 78 of each of the rotor blades 68. A radial or clearance gap CL is defined between the nozzle tips 76, 78 and the respective shroud inner surfaces 77, 79. The shrouds and shroud assemblies generally reduce leakage from the hot gas path 70. The shroud assemblies can include thermal control rings (FIG. 4; 484, 486) that assist in controlling thermal growth of the shroud thereby controlling the radial or clearance gap CL. Thermal growth in the shroud assemblies is actively controlled with an ACC system. The ACC is used to minimize radial blade tip clearance CL between the outer blade tip and the shroud, particularly during cruise operation of the engine.

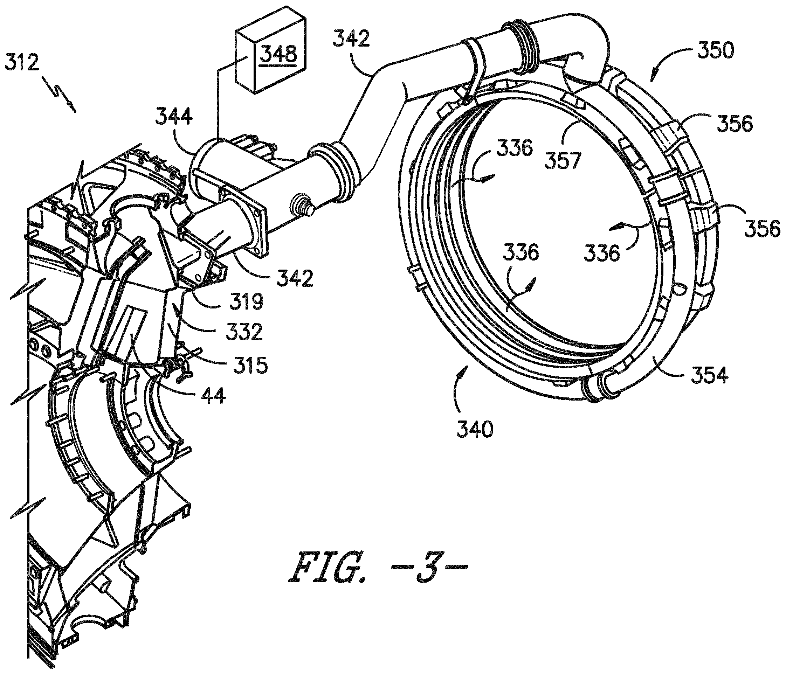

Referring now to FIG. 3 showing a compressed air supply 332 used as a source for thermal control air 336 supplied to a turbine blade tip clearance control apparatus generally shown at 340 through an axial air supply tube 342. An air valve 344 disposed in the air supply tube 342 controls the amount of thermal control airflow. The thermal control air 336 is cooling air in the exemplary embodiment of the active clearance control system 312 illustrated herein. The cooling air is controllably flowed from a fan hub frame 315 at the exit of the booster or low pressure compressor (LPC) (FIG. 1, 22) through the axial air supply tube 342 to a distribution manifold 350 of the turbine blade clearance control apparatus 340. The air valve 344 and the amount of thermal control air 336 impinged for controlling turbine blade tip clearances CL, illustrated in FIG. 2 and 4, is controlled by the controller circuit 348. The controller circuit 348 can be a digital electronic engine control system often referred to as a Full Authority Digital Electronic Control (FADEC) and controls the amount and temperature if so desired of the thermal control air 336 impinged on forward and aft thermal control rings 484 and 486, and other engine structures, to control the turbine blade tip clearance CL. In several embodiments, the controller circuit 348 may include suitable computer-readable instructions that, when implemented, configure the controller circuit 348 to perform various different functions, such as receiving, transmitting and/or executing control signals using computer logic.

A computer generally includes a processor(s) and a memory. The processor(s) can be any known processing device. Memory can include any suitable computer-readable medium or media, including, but not limited to, RAM, ROM, hard drives, flash drives, or other memory devices. Memory stores information accessible by processor(s), including instructions that can be executed by processor(s). The instructions can be any set of instructions that when executed by the processor(s), cause the processor(s) to provide desired functionality. For instance, the instructions can be software instructions rendered in a computer-readable form. When software is used, any suitable programming, scripting, or other type of language or combinations of languages may be used to implement the teachings contained herein. Alternatively, the instructions can be implemented by hard-wired logic or other circuitry, including, but not limited to application-specific circuits.

Memory can also include data that may be retrieved, manipulated, or stored by processor(s). For instance, after receiving the temperature or flowrate measured in the ACC system 312, memory can store the information. Additionally, memory can store parameters for various other sources.

The computing device can include a network interface for accessing information over a network. The network can include a combination of networks, such as Wi-Fi network, LAN, WAN, the Internet, cellular network, and/or other suitable network and can include any number of wired or wireless communication links. For instance, the computing device could communicate through a wired or wireless network with the ACC system 312.

FIG. 3 additionally shows an air supply inlet 319 to the axial air supply tube 342 that is located downstream of outlet guide vanes (see FIG. 1, 44 & FIG. 3, 344) disposed in the fan bypass airflow passage 48 downstream of the fan 40 (see FIG. 1). The distribution manifold 350 encircles a portion of the high pressure turbine (FIG. 2, 28). The manifold 350 includes an annular supply tube 354 that distributes the cooling air to a plurality of plenums 356 of a plurality of header assemblies 357 from which the cooling air is distributed to a plurality of annular spray rails (FIG. 4, 460) circumscribed about the engine axis 12 as illustrated in FIG. 1. FIG. 3 also shows three of the plenums 356 are located in each one of the plurality of header assemblies 357 circumferentially positioned around the HPT (FIG. 2, 28).

Referring to FIG. 4, each of the header assemblies 357 include a base portion 358, with circumferentially spaced apart box-shaped headers 361 formed on the radially outer side 362 of the base portion 358. Each of the headers 361 is connected to the annular supply tube 354. Supply elongated panel holes 363 are disposed through the base portion 358 allowing the cooling air to flow from the supply plenums 356 to the plurality of spray rails 460. The spray rails 460 are segmented to form arcuate segments formed to the base portion 358 that is part of the header assembly 357. The spray rails 460 are closed and sealed at the circumferential ends of each segment.

It is well known in the industry that small turbine blade tip clearances CL provide lower operational specific fuel consumption (SFC) and, thus, large fuel savings. The forward and aft thermal control rings 484 and 486 are provided to more effectively control blade tip clearance CL with a minimal amount of time lag and thermal control (cooling or heating depending on operating conditions) airflow. The forward and aft thermal control rings 484 and 486 are attached to or otherwise associated with the outer casing 466 and may be integral with the respective casing (as illustrated in FIG. 4), bolted to or otherwise fastened to the casing or mechanically isolated from but in sealing engagement with the casing. The thermal control rings 484, 486 provide thermal control mass to more effectively move the shroud segments 477 radially inwardly (and outwardly if so designed) to adjust the blade tip clearances CL.

The plurality of spray rails 460 are illustrated in FIG. 4 as having five spray rails with spray holes 462 oriented to impinge thermal control air 336 (cooling air) onto bases of the forward and aft thermal control rings 484 and 486 and other engine structures to cause the shroud segments 477 to move radially inwardly to tighten up or minimize the blade tip clearances CL. The spray holes 462 can be integral with the double wall heat shield 610, for example 3D printed as a void opening between the inner and outer walls of the heat shield 610. The spray holes 462 can also be a fabricated, joined and sealed between the inner and outer wall. The spray holes 462 can be shaped as slits, slots, holes, cutouts, conical nozzles, or other profiled openings through the radial thickness of the double wall heat shield 610. More particularly, the spray holes 462 are oriented to impinge thermal control air 336 (cooling air) into the centers of the fillets of the forward and aft thermal control rings 484 and 486 to cause the shroud segments 477 to move radially inwardly to tighten up or minimize the blade tip clearances CL. Impinging thermal control air 336 onto the bases or into centers of the fillets of the thermal control rings provides a more effective use of the thermal control or cooling air by increasing heat transfer through the thermal control rings and flanges thereby allowing the air flow resulting from impinged thermal control air to wash radially outwardly along the entirety of the thermal control rings and/or flanges.

Generally, box-shaped spray rails 460 extend radially inwardly from the header assemblies 357 so that their respective spray holes 462 are better oriented to impinge thermal control air 336 (cooling air) onto or close to the cooled engine structures. The generally box-shaped spray rails 460 are positioned proximate the thermal control rings 484, 486 and other engine structures to minimize the impingement distance the cooling air has to travel before reaching the cooled engine structures. This positioning results in greater clearance control between the HPT blade, LPT blade, or compressors and their respective shrouds for the same amount of thermal air or cooling flow. Thus, engine SFC is improved and operating efficiency is increased. It also results in improved capability of maintaining the operating efficiency during the deterioration of the engine with use, increased time on wing, and improved life of the casing at bolted flanges.

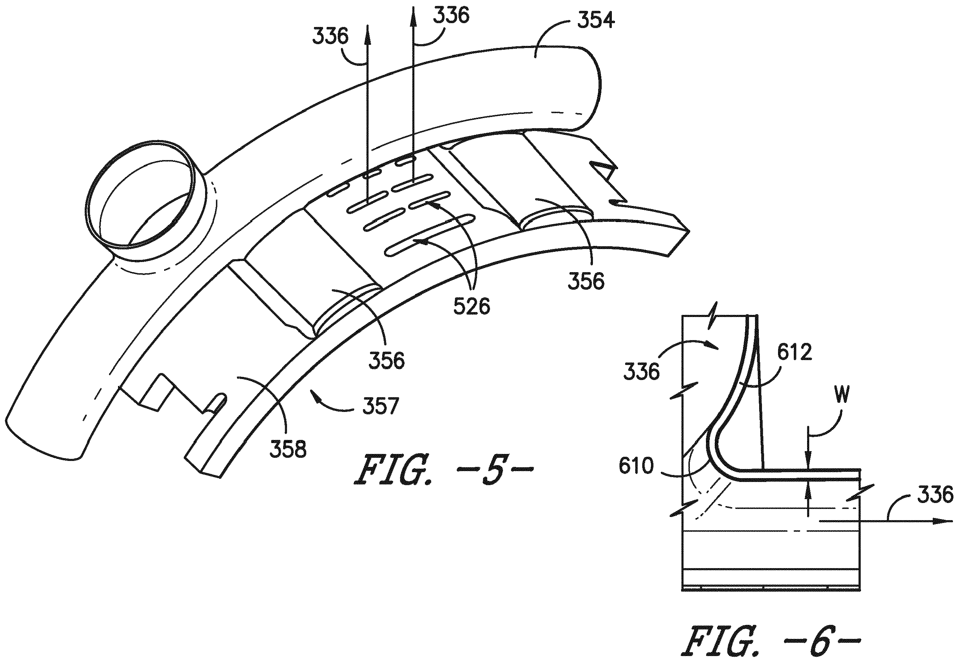

Illustrated in FIG. 5, is a portion of a header assembly 357 including circumferentially extending exhaust passages 526 to circumferentially exhaust the thermal control air 336 from a generally annular region between the outer casing 466 and the distribution manifold 350 after the thermal control air 336 has been sprayed on the thermal control rings and/or onto the outer casing 466 by the spray rails 460. The exhaust passages 526 are illustrated herein as being elongated openings formed in the distribution manifold 350 between supply plenums 356.

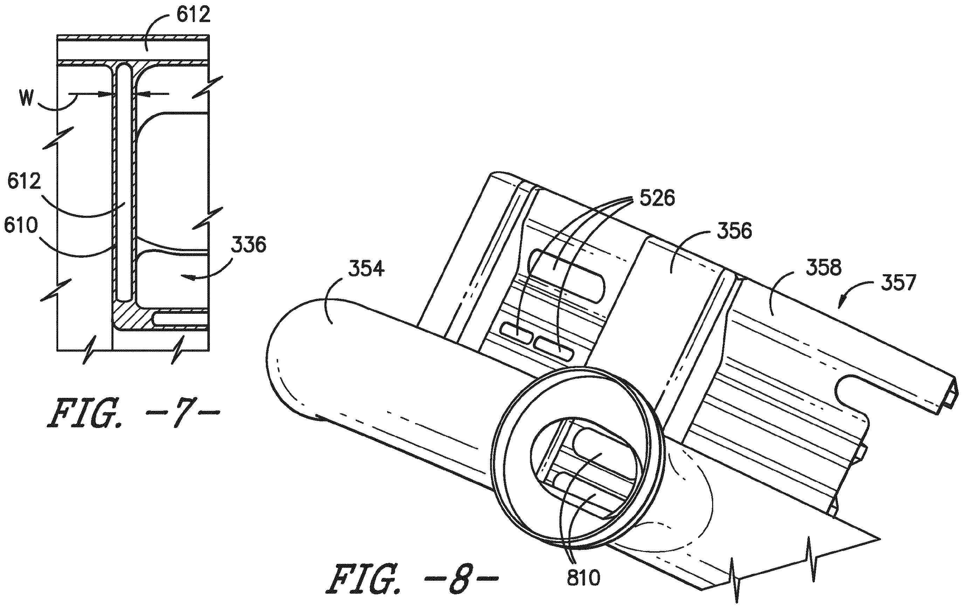

FIGS. 6 and 7 are close-up sections of rounded and squared corner -portions, respectively, of the thermal control apparatus 312 showing the double wall heat shield surface that is in direct contact with the thermal control air 336. The integrated double wall heat shield 610 forms a hermetically sealed cavity 612 between the double walls to thermally insulate the surface and decrease heat transfer to the thermal control air 336 from surrounding heat sources. The width W of the hermetically sealed cavity 612 can be in the range of approximately 5 mils (0.005 inches) to 500 mils (0.500 inches), depending on available clearance space and structural integrity of the walls.

FIG. 8 is a radially inwardly looking perspective view of a header assembly 357 segment showing the axial air supply tube 342 entry opening from the annular supply tube 354. Also shown are plenum supply holes 810, also seen in FIG. 4, that pass thermal control air 336 from the annular supply tube 354 into each plenum 356 for distribution through the elongated panel holes 363 (FIG. 4) into the spray rails 460 and out the spray holes 462.

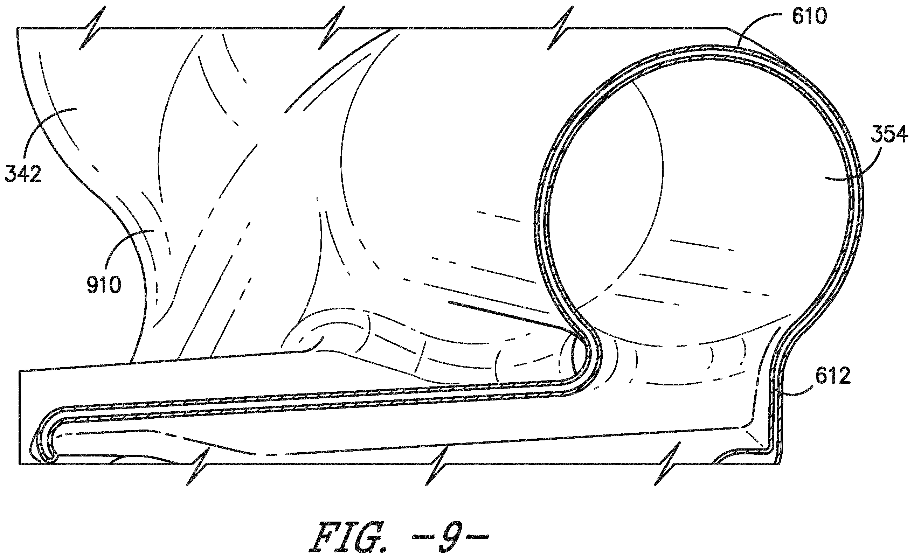

FIG. 9 is a perspective view of the annular supply tube 354 t-fitting 910 at the axial air supply tube 342 entry point showing the double wall heat shield 610 construction and the hermetically sealed cavity 612 of the annular supply tube 354 positioned atop a distribution manifold 350.

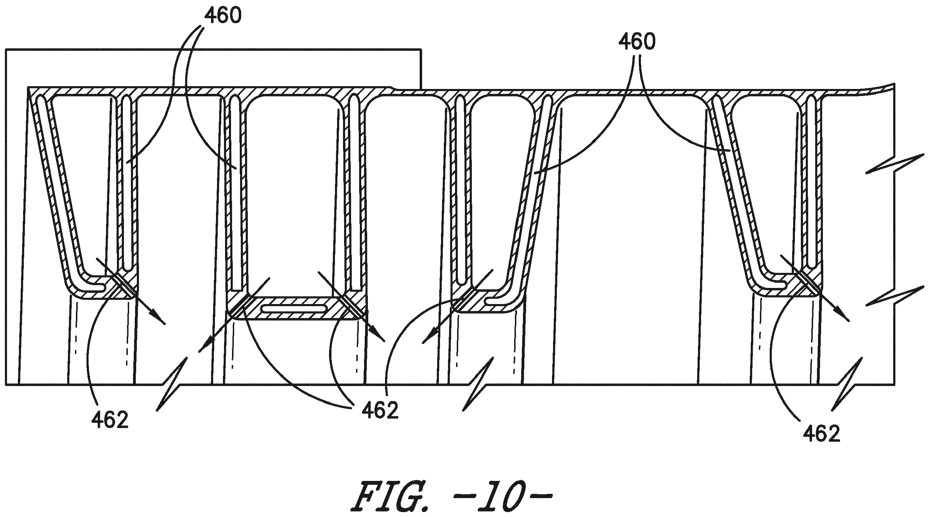

FIG. 10 is a section cut through four of the spray rails 460 showing the spray holes 462 positioned at the thickened portion of the double wall heat shield 610. The thickened portion does not contain a hermetically sealed cavity 612. The thickened portion provides structural integrity for the spray holes 462 positioned at the corners of the spray rails 460.

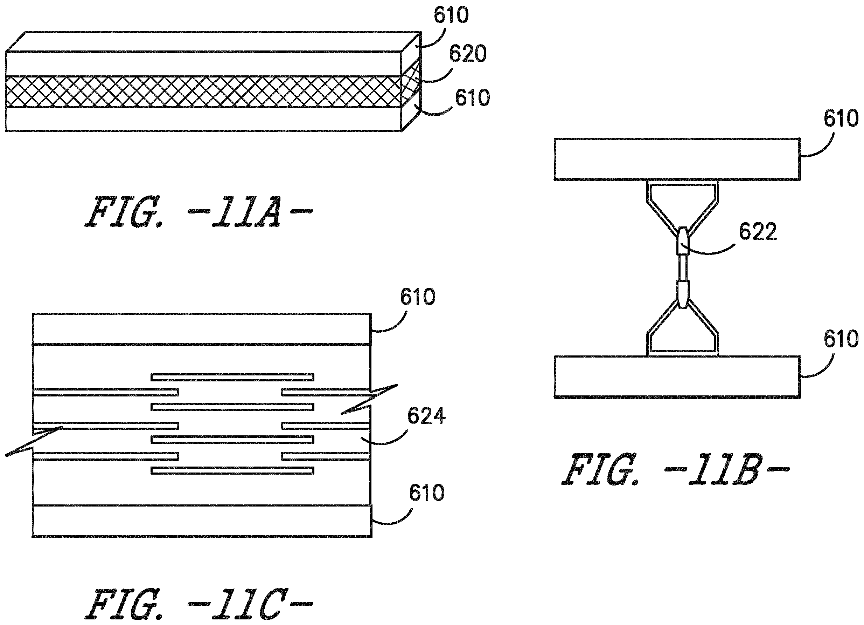

FIGS. 11A - C are three examples of structural support members that may be disposed between portions of the double wall heat shield 610 walls to prevent collapsing the hermetically sealed cavity 612. The structural support members can be a lattice structure 620 sandwiched between the double wall heat shield 610 (see FIG. 11A), at least one individual stud member 622 sandwiched between the double wall heat shield 610 (see FIG. 11B), or at least one offset slotted stud web 624 sandwiched between the double wall heat shield 610 (see FIG. 11C). These structural support members span between the walls and minimize conductive thermal bridging between the heat shield 610 walls.

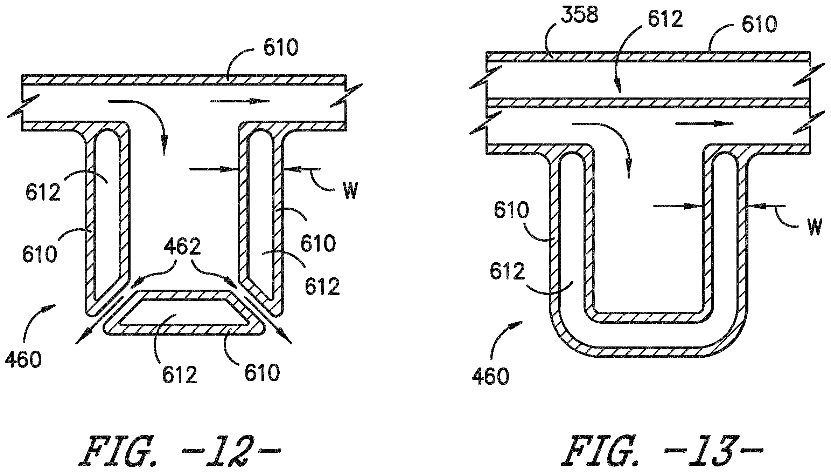

FIG. 12 is a section cut of a portion of the double-wall heat shield 610 between impingement features having no material junction at the bottom corners of the spray rail 460 to provide better insulation where the thermal control air exits at spray holes 462. FIG. 13 is a section cut of a portion of the double-wall heat shield 610 showing a double-wall base panel 358 with no thermal control air exits (no spray holes).

Typical metal 3D build materials for the thermal control apparatus 312 can be nickel based superalloys such as Inconel 625 (Inco-625) or Inconel 718, other superalloys such as Titanium Ti64 or Cobolt Chrome (CoCrMo), or any of the stainless steels and any mixtures thereof. These superalloys contain nickel, titanium, cobalt, chromium or mixtures thereof. Any metal build material suitable for high-end aerospace applications can be used for constructing the thermal control apparatus.

It should also be noted that the integrated double wall heat shield 610 may additionally be utilized in a similar manner in the low pressure compressor 22, high pressure compressor 24, and/or low pressure turbine 30. Accordingly, the thermal control apparatus and methods using double-wall construction as disclosed herein are not limited to use in HP turbines, and may be utilized in any suitable section of a gas turbine engine 10 including the air valve 344 body and any ductwork on the air supply tube 342. Also, additional spray rails 460 can be added to other sections of the gas turbine engine 10 to provide active clearance control on any exterior or interior turbine casing components that support the stator shroud.

A method for supplying and exhausting thermal control air 336 includes spraying thermal control air 336 on at least one thermal control ring 484 attached to an outer casing 466 and/or onto the outer casing 466 with spray rails 460 having spray holes 462 in an annular region between the outer casing 466 and a thermal air distribution manifold 350, the thermal control 336 air encircling an axially extending portion of the casing 466 and then circumferentially exhausting the thermal control air 336 through circumferentially extending exhaust passages 526.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A gas turbine engine thermal control apparatus, comprising:
   a thermal air distribution manifold encircling an axially extending portion of an outer casing, the manifold comprising;
      a plurality of header assemblies with an annular supply tube disposed in fluid supply communication with a plurality of supply plenums,
      a plurality of annular spray rails in fluid supply communication with at least one of the plurality of supply plenums, the annular spray rails defining spray holes oriented to impinge thermal control air onto the outer casing having at least one thermal control ring attached to the outer casing,
      circumferentially extending exhaust passages operable to exhaust the thermal control air from an annular region between the outer casing and the manifold after the thermal control air has been sprayed on at least one thermal control ring attached to the outer casing and onto the outer casing by the annular spray rails, and
   wherein the thermal control apparatus surfaces in direct contact with the thermal control air comprise an integrated double wall heat shield defining a hermetically sealed cavity therein.
2. The gas turbine engine thermal control apparatus of clause 1, further comprising;
   an axial air supply tube with an integrated double wall heat shield wall.
3. The gas turbine engine thermal control apparatus of any preceding clause, further comprising;
   an air valve disposed in the axial air supply tube.
4. The gas turbine engine thermal control apparatus of any preceding clause, further comprising;
   a controller circuit.
5. The gas turbine engine thermal control apparatus of any preceding clause, wherein the spray holes are disposed integral with the double wall heat shield.
6. The gas turbine engine thermal control apparatus of any preceding clause, wherein the spray holes are fabricated, joined and sealed between the inner and outer wall of the double wall heat shield.
7. The gas turbine engine thermal control apparatus of any preceding clause, wherein the spray holes are shaped as slits, slots, holes, cutouts, conical nozzles, or mixtures thereof.
8. The gas turbine engine thermal control apparatus of any preceding clause, wherein the spray rails are generally box shaped and extend radially inward from the header assemblies.
9. The gas turbine engine thermal control apparatus of any preceding clause, wherein the width of the hermetically sealed cavity is in the range of approximately 5 mils to 500 mils.
10. The gas turbine engine thermal control apparatus of any preceding clause, wherein surfaces in direct contact with the thermal control air are built from superalloys comprising nickel, titanium, cobalt, chromium or mixtures thereof.
11. The gas turbine engine thermal control apparatus of any preceding clause, wherein the double wall heat shield further comprises structural support members disposed in portions of the double wall heat shield and formed as a lattice structure, individual stud members, offset slotted stud webs, or mixtures thereof.
12. A method for supplying and exhausting thermal control air in a gas turbine engine thermal control apparatus, comprising the steps of:
   manufacturing the thermal control apparatus surfaces, having direct contact with the thermal control air, with an integrated double wall heat shield defining a hermetically sealed cavity between the walls of the double wall heat shield,
   spraying thermal control air on at least one thermal control ring attached to an outer casing and/or onto the outer casing with spray rails having spray holes in an annular region between the outer casing and a thermal air distribution manifold,
   encircling the thermal control air in an axially extending portion of the casing, and
   exhausting the thermal control air through circumferentially extending exhaust passages.
13. The method of any preceding clause, wherein the thermal control apparatus further comprises an axial air supply tube with an integrated double wall heat shield wall.
14. The method of any preceding clause, wherein the thermal control apparatus further comprises an air valve disposed in the axial air supply tube.
15. The method of any preceding clause, wherein the thermal control apparatus further comprises a controller circuit.
16. The method of any preceding clause, wherein the spray holes are disposed integral with the double wall heat shield.
17. The method of any preceding clause, wherein the spray holes are fabricated, joined and sealed between the inner and outer wall of the double wall heat shield.
18. The method of any preceding clause, wherein the spray holes are shaped as slits, slots, holes, cutouts, conical nozzles, or mixtures thereof.
19. The method of any preceding clause, wherein the width of the hermetically sealed cavity is in the range of approximately 5 mils to 500 mils.
20. The method of any preceding clause, wherein surfaces in direct contact with the thermal control air are built from superalloys comprising nickel, titanium, cobalt, chromium or mixtures thereof.

## Claims

1. A gas turbine engine thermal control apparatus (340), comprising:
a thermal air distribution manifold (350) encircling an axially extending portion of an outer casing (466), the manifold (350) comprising;
a plurality of header assemblies (357) with an annular supply tube (354) disposed in fluid supply communication with a plurality of supply plenums (356),
a plurality of annular spray rails (460) in fluid supply communication with at least one of the plurality of supply plenums (356), the annular spray rails (460) defining spray holes (462) oriented to impinge thermal control air (336) onto the outer casing (466) having at least one thermal control ring (484) attached to the outer casing (466),
circumferentially extending exhaust passages (526) operable to exhaust the thermal control air (336) from an annular region between the outer casing (466) and the manifold (350) after the thermal control air (336) has been sprayed on at least one thermal control ring (484) attached to the outer casing (466) and onto the outer casing (466) by the annular spray rails (460), and
wherein the thermal control apparatus (340) surfaces in direct contact with the thermal control air (336) comprise an integrated double wall heat shield (610) defining a hermetically sealed cavity (612) therein.

2. The gas turbine engine thermal control apparatus (340) of claim 1, further comprising an axial air supply tube (342) with an integrated double wall heat shield (610) wall.

3. The gas turbine engine thermal control apparatus (340) of claim 2, further comprising an air valve (344) disposed in the axial air supply tube (342).

4. The gas turbine engine thermal control apparatus (340) of any preceding claim, further comprising a controller circuit (348).

5. The gas turbine engine thermal control apparatus (340) of any preceding claim, wherein the spray holes (462) are disposed integral with the double wall heat shield (610).

6. The gas turbine engine thermal control apparatus (340) of any preceding claim, wherein the spray holes (462) are fabricated, joined and sealed between the inner and outer wall of the double wall heat shield (610).

7. The gas turbine engine thermal control apparatus (340) of any preceding claim, wherein the width (W) of the hermetically sealed cavity (612) is in the range of approximately 5 mils to 500 mils.

8. The gas turbine engine thermal control apparatus (340) of any preceding claim, wherein surfaces in direct contact with the thermal control air (336) are built from superalloys comprising nickel, titanium, cobalt, chromium or mixtures thereof.

9. The gas turbine engine thermal control apparatus (340) of any preceding claim, wherein the double wall heat shield (610) further comprises structural support members disposed in portions of the double wall heat shield (610) and formed as a lattice structure (620), individual stud members (622), offset slotted stud webs (624), or mixtures thereof.

10. A method for supplying and exhausting thermal control air (336) in a gas turbine engine thermal control apparatus (340), comprising the steps of:
manufacturing the thermal control apparatus (340) surfaces, having direct contact with the thermal control air (336), with an integrated double wall heat shield (610) defining a hermetically sealed cavity (612) between the walls of the double wall heat shield (610),
spraying thermal control air (336) on at least one thermal control ring (484) attached to an outer casing (466) and/or onto the outer casing (466) with spray rails (460) having spray holes (462) in an annular region between the outer casing (466) and a thermal air distribution manifold (350),
encircling the thermal control air (336) in an axially extending portion of the outer casing (466), and
exhausting the thermal control air (336) through circumferentially extending exhaust passages (526).
